# EUROPEAN PATENT APPLICATION

(11) **EP 4 160 510 A1**
(43) Date of publication of application: **05.04.2023**
(21) Application number: 22186864.9
(22) Date of filing: 26.07.2022
(51) Int. Cl.: G06Q 30/06

(54) **MOBILE SHOPPING PLATFORM USING XR CONTENT**

(30) Priority: 30.09.2021 KR 20210129968
(71) Applicant: Spaceelvis Co., Ltd., Seoul 06652 (KR)
(72) Inventor: LEE, Seung Ho, 16846 Yongin-si, Gyeonggi-do (KR); ZO, Sung Ho, 08801 Seoul (KR)
(74) Representative: Krauns, Christian

(57) **Abstract**

A mobile shopping platform using XR content is proposed. The mobile shopping platform includes an image production part including a studio configured to provide an environment to capture images based on extended reality (XR), and a camera configured to capture the images in the studio, a broadcast server configured to receive the images captured by the camera and transmit information and sale prices of products appearing in the images after the information and the sale prices are additionally written, and an output device configured to receive and output the images transmitted from the broadcast server, capable of being operated and set by touching a display, and for which a customer possesses, wherein the output device includes a setting part, and the setting part includes an operation prevention part for preventing operation and a purchase button part for generating a button on each of the images being output on the display.

## Description

### CROSS REFERENCE TO RELATED APPLICATION

The present application claims priority to Korean Patent Application No. 10-2021-0129968, filed September 30, 2021, the entire contents of which is incorporated herein for all purposes by this reference.

### BACKGROUND OF THE INVENTION

### Field of the Invention

The present disclosure relates to a mobile shopping platform using XR content. More particularly, the present disclosure relates to a mobile shopping platform, using XR content, for providing an interface that enables a user to view the XR content with a smartphone and purchase a product displayed in the XR content, the interface supporting the XR content.

### Description of the Related Art

A conventional offline shopping method, in which customers visit a real offline store to purchase desired products, has been changed to an Internet shopping method using a computer, or to a home shopping mall method using TV commercials. In addition, various types of cyber shopping malls that provide virtual shopping malls have become common.

Conceptually, a shopping mall does not only exist on the Internet, but is a concept that has been present in offline stores. That is, a cyber shopping mall is a type of method in which when a buyer intends to purchase a product, the buyer purchases the product through a website built on the Internet and pays (by a credit card, electronic money, cash, etc.) for the purchased product without directly visiting a store where products are sold.

Such a cyber shopping mall is pursuing a unique service type and is using freely a sales strategy that emphasizes differentiation from other cyber shopping malls. In the shopping-related field such as purchasing, cyber shopping has come to occupy a share that is the second in order as that of offline shopping due to the convenience of access, the development of purchase and payment means, and the development of delivery systems.

In line with such a trend, in order to increase consumer accessibility to products, a virtual reality shopping mall that provides stereoscopic images of the products for sale is attracting attention.

As one of technologies for providing the virtual reality shopping mall, a mobile online shopping mall viewed by a VR camera is disclosed in (Patent Document 1).

The above-described technology is characterized in that VR stereoscopic images are formed by photographing and producing target products or images (included), advertisements, and the like of the shopping mall by a VR camera, left and right images are synthesized, organized, and edited, and then the VR stereoscopic images are uploaded to a corresponding online shopping mall.

In addition, as a technology for providing a shopping mall based on augmented reality, a "SYSTEM FOR PROVIDING SHOPPING INFORMATION BASED ON AUGMENTED REALITY AND CONTROL METHOD THEREOF" are disclosed in (Patent Document 2).

The above technology is characterized in that virtual reality is implemented by including tags related to products or stores in three-dimensional (3D) panoramic images for the corresponding products displayed in the stores or the corresponding stores shown on road views of a street, so that additional information related to the products or stores provided offline may be delivered through the tags while views generated by encountering real department stores, shopping malls, streets, etc. are provided naturally.

The above described technologies have an advantage where products are three-dimensionalized and provided in a virtual space, and also designs, sizes, practicality, usage methods, and the like of the products are provided, thereby promoting the purchase of the products.

However, in the reality that the replacement and change cycle of products shown in virtual reality or augmented reality is getting shorter and shorter such as that the products on display are momentarily changing according to the needs of consumers and the products on display are replaced according to product upgrades, the conventional implementation of a virtual shopping mall including the above described technologies uses a method of arranging and providing products produced in three-dimensional images thereof in a virtual online space, whereby there occurs a problem in that when the products need to be replaced or changed, the virtual online space should be edited accordingly.

That is, when the products displayed in the virtual online space are changed or replaced, the products should be re-uploaded with the corresponding stereoscopic images. However, due to the fact that the technology for editing the virtual online space is complex and time-consuming, and requires significant cost of implementation, whereby there are many difficulties in continuous maintenance of the virtual online space.

### Documents of Related Art

(Patent Document 0001) Korean Patent Application Publication No. 10-2017-0085260
(Patent Document 0002) Korean Patent Application Publication No. 10-2017-0042258

### SUMMARY OF THE INVENTION

An objective of the present disclosure is to provide a mobile shopping platform, using XR content, for providing an interface that enables a user to view the XR content with a smartphone and purchase a product displayed in the XR content, the interface supporting the XR content.

In order to solve the above problems, a mobile shopping platform using XR content according to an exemplary embodiment of the present disclosure includes: an image production part including a studio configured to provide an environment to capture images based on extended reality (XR), and a camera configured to capture the images in the studio; a broadcast server configured to receive the images captured by the camera and transmit information and sale prices of products appearing in the images after the information and the sale prices are additionally written; and an output device configured to receive and output the images transmitted from the broadcast server, capable of being operated and set by touching a display, and for which a customer possesses, wherein the output device includes a setting part capable of setting an interface, and the setting part includes: an operation prevention part configured to prevent operation even though the display is touched when the images captured by the image production part are output; and a purchase button part configured to generate a button on each of the images being output on the display, and enable linking to an information and purchase page on each of the products being output from the respective images when the button is touched for a predetermined period of time or more.

In addition, in the mobile shopping platform using the XR content according to the exemplary embodiment of the present disclosure, the studio may include: one or more wall parts; and a floor part, wherein each of the wall parts and floor part may be composed of a display so that the images are output on the respective wall parts and floor part.

In addition, in the mobile shopping platform using the XR content according to the exemplary embodiment of the present disclosure, the broadcast server may include: an image management part configured to store and manage the images captured by the image production part and the images to be output to each display installed in the studio; and a product information part configured to additionally write the information and the sale prices of the products appearing in the images captured by the camera.

In addition, in the mobile shopping platform using the XR content according to the exemplary embodiment of the present disclosure, the broadcast server may further include a purchase information part configured to display, on the output device, purchase information including the sale prices for the products appearing at a time point when the purchase button part is pressed among the images output from the output device.

In addition, in the mobile shopping platform using the XR content according to the exemplary embodiment of the present disclosure, the output device may include a product information button part configured to load product information input from the product information part when the products for sale in the images received from the broadcast server is touched, wherein when the product information button part is operated, the purchase button part and the product information input from the product information part may be displayed.

In addition, in the mobile shopping platform using the XR content according to the exemplary embodiment of the present disclosure, the mobile shopping platform may further include a screen operation control part configured to set gestures input to the display of the output device, wherein the screen operation control part may set the gestures including a function of closing pop-up information or controlling a play time of the images by operating the product information button part or the purchase button part.

Such a solution may become more apparent from the following detailed description of the present disclosure based on the accompanying drawings.

Prior to this, the terms or words used in the present disclosure and claims are not to be construed as their ordinary and dictionary meanings, and should be interpreted as meanings and concepts corresponding to the technical spirit of the present disclosure based on the principle that inventors may properly define the concept of a term in order to best describe their disclosure.

According to the exemplary embodiment of the present disclosure, images output to an output device (or a smartphone) may be preset, or the interface may be controlled through a fundamental gesture provided by a supplier that supplies the images.

In addition, according to the exemplary embodiment of the present disclosure, the content (i.e. video) produced on the basis of extended reality (XR) may be transmitted to the customer, and the products included in the content may be easily paid for.

### BRIEF DESCRIPTION OF THE DRAWINGS

FIG. 1 is an overall configuration view illustrating a mobile shopping platform using XR content according to an exemplary embodiment of the present disclosure.

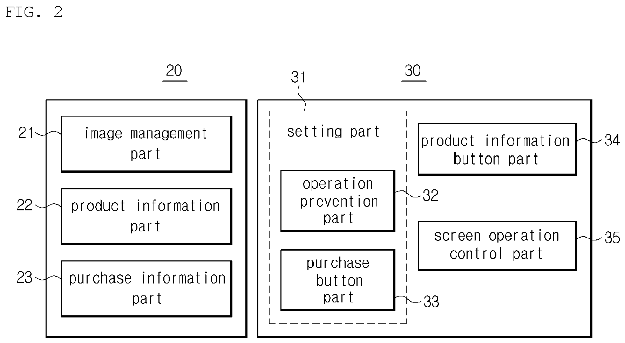

FIG. 2 is a block diagram illustrating components of a server and an output device of the mobile shopping platform using the XR content according to the exemplary embodiment of the present disclosure.

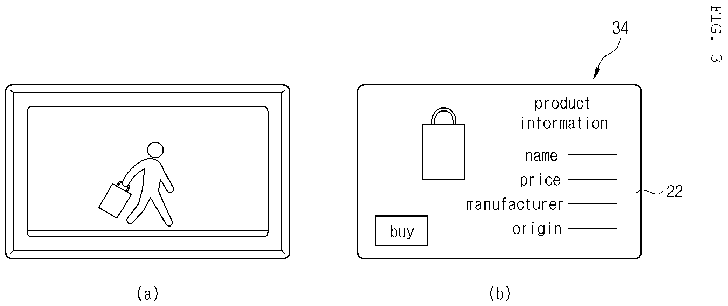

FIGS. 3A and 3B are exemplary views illustrating XR content images displayed on the output device of the mobile shopping platform using the XR content according to the exemplary embodiment of the present disclosure.

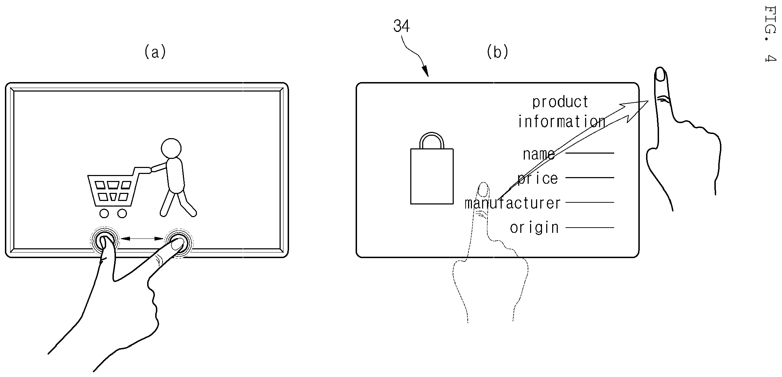

FIGS. 4A and 4B are exemplary views illustrating a use case processed when a gesture is input to the output device of the mobile shopping platform using the XR content according to the exemplary embodiment of the present disclosure.

### DETAILED DESCRIPTION OF THE INVENTION

The specific aspects and specific technical features of the present disclosure will become more apparent from the following detailed description and exemplary embodiments in conjunction with the accompanying drawings. In adding reference numerals to the components of each drawing, it should be noted that the same reference numerals are used to refer to the same components as much as possible even if displayed on different drawings. In addition, in the following description of the exemplary embodiment of the present disclosure, detailed descriptions of related known functions and components incorporated herein will be omitted when it is determined that the subject matter of the present disclosure may be obscured thereby.

In addition, when describing the components of the present disclosure, terms such as first, second, A, B, (a) or (b) may be used. Since these terms are provided merely for the purpose of distinguishing the components from each other, they do not limit the nature, sequence, or order of the components. When a component is described as being "connected", "coupled", or "linked" to another component, the component may be directly connected or connected to the other component. However, it should be understood that yet another component between each of the components may be "connected", "coupled", or "linked" to each other.

Hereinafter, the exemplary embodiment of the present disclosure will be described in detail on the basis of the accompanying drawings.

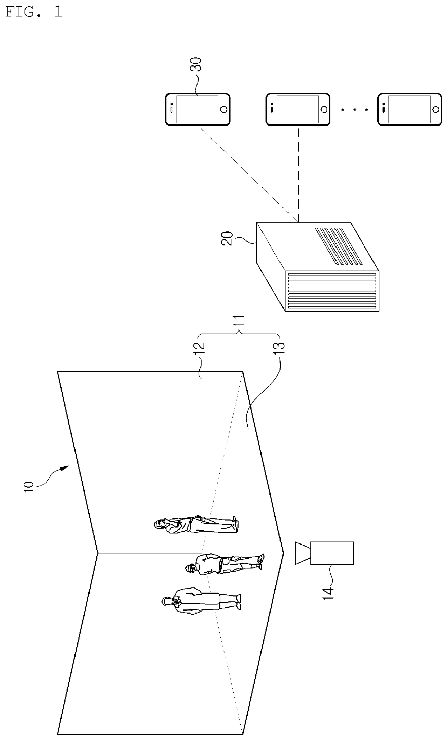

As shown in FIG. 1, the mobile shopping platform using the XR content according to the exemplary embodiment of the present disclosure may be configured to include: an image production part 10 including a studio 11 configured to provide an environment for capturing images based on extended reality (XR) and a camera 14 configured to capture the images in the studio 11; a broadcast server 20 configured to receive the images captured by the camera 14, additionally write, to the received images, information and sale prices of products appearing in the received images, and then transmit the images to outside; and an output device 30 configured to receive the images transmitted from the broadcast server 20 and output the images.

The studio 11 may include one or more wall parts 12 and a floor part 13 so as to create a photography environment, wherein each of the wall part 12 and the floor part 13 may be composed of a display, so that the broadcast server 20 may output previously stored images.

In particular, the floor part 13 may be made of durable tempered glass in order to prevent damage to the display because one or more objects (i.e. products or people) may be positioned on the floor part 13 to conduct capturing of the objects for a long time. However, this configuration is optional.

The camera 14 may capture content that is processed inside the studio 11, and transmit the captured content (i.e. video) to the broadcast server 20, and accordingly the camera 14 may be configured in a structure where a communication module (not shown) is embedded therein.

The broadcast server 20 may perform functions of receiving images captured by the camera 14, and additionally writing product information including specifications, information, manufacturers, and sale prices for products appearing in the images, so as to transmit the images to the outside (or the output devices).

Specifically, the broadcast server 20 may include: an image management part 21 configured to store and manage images; a product information part 22 configured to write information about products appearing in the images; and a purchase information part 23 configured to display purchase information limited to products for which intentions to purchase the same are indicated, the products appearing in the images output from an output device.

The image management part 21 stores: images captured by and received from the image production part 10; and images to be displayed on the wall parts 12 and floor part 13, wherein the images to be displayed in the wall parts 12 and floor part 13 may be stored and managed in advance, and the images produced by the image production part 10 may be transmitted to the product information part 22 so that product information is managed to be written.

The product information part 22 may write information about one or more products appearing in images captured by the image production part 10, and, for example, assuming that there are seven products appearing in the images, each piece of product information for the seven products may be written according to a timeline. Specifically, a structure may be configured in such a way that product information about a product A displayed in an image at 1:00 is written, and product information about a product B displayed in an image at 2:00 is written.

The output device 30 is a device possessed by a consumer (or a customer) who enjoys content by receiving the content (i.e. images) produced by the image production part 10 and the broadcast server 20. An ordinary smartphone, tablet, and iPad may be included as the output device 30.

Such an output device 30 may receive images by installing an application supported by a separate platform, and may support a separate interface. Specifically, through a setting part 31, the output device may set whether to operate a display or whether to pop-up product information and purchase information.

The setting part 31 may include: an operation prevention part 32 configured to prevent operation even though the display is touched; and a purchase button part 33 configured to enable linking to an information and purchase page about each of the products being displayed in the respective images being output from the output device 30.

When the operation prevention part 32 is set, even though the display is touched, the operation may be set to be turned off, or to be operable.

When the purchase button part 33 is set, a button is generated at a predetermined position (i.e. near a corner in the present disclosure) when an image is displayed on the display of the output device 30, and product information and purchase information about a product being output on the image may be popped up when a user touches the generated button for a predetermined time or longer. Here, the product information may pop up when the product displayed on the image are touched. The button or the product operation is optional.

Here, the broadcast server 20 may further include a purchase information part 23 configured to enable linking to purchase information by operating a button displayed on the output device 30 and display the purchase information about the product on the output device. When the button generated by the purchase button part 33 is pressed, the purchase information previously stored in the product information part 22 may be loaded and displayed on the output device 30.

In addition, the output device 30 may further include a product information button part 34 configured to retrieve product information input by the product information part 22 when a product displayed in images received from the broadcast server 20 is touched. The product information button part 34 may be configured in such a structure in which when the product information button part 34 is operated, the product information input by the product information part and the button generated by the purchase button part 33 are displayed at a predetermined position to confirm the product information, and then purchase may be made immediately.

Here, the product information refers to detailed information about the product, and the purchase information may include information necessary for purchase, for example, a price, a delivery period, and a courier company.

The output device 30 may be configured to further include a screen operation control part 36 for setting gestures input to a display (i.e. a display of the output device).

The screen operation control part 36 may include: a function of controlling a generation position of the product information button part or the purchase button part and whether the product information button part or the purchase button part is operated or not; and a function of controlling a play time of images according to the gestures input to the display.

For example, by setting in advance one or more gestures, a customer may operate an interface through the gestures in such a way that when a user inputs a gesture of flicking from inside to outside (i.e. flipping to outside) on the display, a function of closing the corresponding pop-up information or the images may be performed, and when the user inputs a gesture of flicking from left to right, a function of skipping the play time of the images for a predetermined period of time is performed.

That is, according to the exemplary embodiment of the present disclosure, the images output to the output device (or the smartphone) may be preset, or the interface may be controlled through fundamental gestures provided by the supplier that supplies the images.

In addition, according to the exemplary embodiment of the present disclosure, the content (video) produced on the basis of extended reality (XR) may be transmitted to the customer, and the product included in the content may be easily paid for.

Although the present disclosure has been described in detail through the exemplary embodiment, the exemplary embodiment is for describing the present disclosure in detail, and the mobile shopping platform using the XR content according to the present disclosure is not limited thereto. In addition, terms such as "include", "compose", or "have" described above mean that the corresponding component may be embedded unless otherwise stated, so it should be construed as not excluding other components, but may further include other components. All terms, including technical and scientific terms, have the same meaning as commonly understood by those skilled in the art to which the present disclosure belongs, unless otherwise defined.

Although exemplary aspects of the present disclosure have been described for illustrative purposes, those skilled in the art will appreciate that various modifications, additions and substitutions are possible, without departing from essential characteristics of the present disclosure. Therefore, the exemplary embodiments disclosed in the present disclosure are not intended to limit the technical idea of the present disclosure but to describe the present disclosure, and the scope of the technical idea of the present disclosure is not limited by these exemplary embodiments. The scope of protection of the present disclosure should be interpreted by the following claims, and all technical ideas within the scope equivalent thereto should be construed as being included in the scope of the present disclosure.

## Claims

1. A mobile shopping platform using XR content, the mobile shopping platform comprising:
an image production part comprising a studio configured to provide an environment to capture images based on extended reality (XR), and a camera configured to capture the images in the studio;
a broadcast server configured to receive the images captured by the camera and transmit information and sale prices of products appearing in the images after the information and the sale prices are additionally written; and
an output device configured to receive and output the images transmitted from the broadcast server, capable of being operated and set by touching a display, and for which a customer possesses,
wherein the output device comprises a setting part capable of setting an interface, and
the setting part comprises:
an operation prevention part configured to prevent operation even though the display is touched when the images captured by the image production part are output; and
a purchase button part configured to generate a button on each of the images being output on the display, and enable linking to an information and purchase page on each of the products being output from the respective images when the button is touched for a predetermined period of time or more.

2. The mobile shopping platform of claim 1, wherein the studio comprises:
one or more wall parts; and
a floor part,
wherein each of the wall parts and floor part is composed of a display so that the images are output on the respective wall parts and floor part.

3. The mobile shopping platform of claim 1 or 2, wherein the broadcast server comprises:
an image management part configured to store and manage the images captured by the image production part and the images to be output to each display installed in the studio; and
a product information part configured to additionally write the information and the sale prices of the products appearing in the images captured by the camera.

4. The mobile shopping platform of anyone of the claims 1 to 3, wherein the broadcast server further comprises a purchase information part configured to display, on the output device, purchase information including the sale prices for the products appearing at a time point when the purchase button part is pressed among the images output from the output device.

5. The mobile shopping platform of anyone of the claims 1 to 4, wherein the output device comprises:
a product information button part configured to load product information input from the product information part when the products for sale in the images received from the broadcast server is touched,
wherein when the product information button part is operated, the purchase button part and the product information input from the product information part are displayed.

6. The mobile shopping platform of anyone of the claims 1 to 5, further comprising:
a screen operation control part configured to set gestures input to the display of the output device,
wherein the screen operation control part sets the gestures comprising a function of closing pop-up information or controlling a play time of the images by operating the product information button part or the purchase button part.
